# EUROPEAN PATENT SPECIFICATION

(11) **EP 4 268 634 B1**
(45) Date of publication and mention of the grant of the patent: **19.11.2025**
(21) Application number: 20966915.9
(22) Date of filing: 24.12.2020
(51) Int. Cl.: A24F 40/40, A24F 40/465, H01M 50/30, A24F 40/20

(54) **FLAVOR INHALER**
GESCHMACKSINHALATOR
INHALATEUR D'ARÔME

(43) Date of publication of application: 01.11.2023
(73) Proprietor: Japan Tobacco Inc., Tokyo 105-6927 (JP)
(72) Inventor: MASUDA, Yuki, Tokyo 130-8603 (JP); YAMADA, Manabu, Tokyo 130-8603 (JP)
(74) Representative: Hoffmann Eitle
(86) International application number: PCT/JP2020/048444
(87) International publication number: WO 2022/137426

(56) References cited:
- WO-A1-98/56052
- CN-A- 111 109 660
- CN-A- 111 109 660
- CN-U- 206 727 144
- JP-A- 2001 229 903
- JP-A- 2003 123 720
- JP-A- 2004 006 213
- JP-A- 2019 506 894
- US-A1- 2017 042 227
- US-A1- 2020 015 522
- US-A1- 2020 253 282

## Description

### TECHNICAL FIELD

The present disclosure relates to a flavor inhaler.

### BACKGROUND ART

In the field of electronic cigarettes, there may possibly be a case where pressure of gas inside a housing of a device is increased due to some trouble with a battery that is disposed in the housing, for example. To cope with such a case, WO 2021/220413 A 1 includes a housing hole in a second end portion of a housing of an aerosol suction device, the second end portion being on an opposite side from a first end portion in which a reception hole for inserting an aerosol generating substrate is provided, for example.

CN 111 109 660 A is related to a flavor inhaler with a housing comprising a ventilation hole and a power source housed in the housing. Gas generated inside the power source can be ejected in a direction not intersecting the ventilation hole. Similar flavor inhalers are derivable from CN 206 727 144 U and US 2020/253282 A1.

### SUMMARY OF INVENTION

### TECHNICAL PROBLEM

The present disclosure provides a flavor inhaler with which force of gas that is generated in a power source and that is ejected into a housing may be reduced. The present invention provides a flavor inhaler as defined in claim 1.

### SOLUTION TO PROBLEM

A first aspect of the present disclosure is a flavor inhaler including: a housing on which a ventilation hole is provided, and a power source that is housed in the housing, where a defining portion that defines an ejection direction of gas generated inside the power source is formed at at least one of the housing and the power source, and the ventilation hole is not provided at a part of the housing that intersects the ejection direction of the gas.

For example, it is assumed that a flow of gas is generated inside the power source due to some trouble with the power source and that the gas is ejected outside. In the first aspect described above, the ventilation hole is not provided at a part of the housing that intersects the ejection direction of the gas. That is, because the ventilation hole is not provided at a position where ejection of the generated gas is directed toward, the gas is discharged outside the housing by colliding with some part of the housing before being discharged from the ventilation hole. As a result, force of the gas is reduced by the collision. Therefore, according to the first aspect, gas inside the housing may be discharged after pressure (the force) is reduced, compared to a configuration where gas is directly ejected from the ventilation hole. When seen from a different point of view, when gas is discharged from the housing through the ventilation hole, momentum according to an impulse of the flow of the discharged gas and in an opposite direction from the flow of gas is generated in the housing according to the law of momentum conservation. The momentum possibly moves the housing in an undesired direction, and is thus desirably small. According to the first aspect, the force of gas that is to be discharged from the ventilation hole is reduced, and size of the momentum that is generated in the housing is also reduced, and thus, undesired displacement of the housing may be prevented. Furthermore, with respect to momentum conservation mentioned above, the ventilation hole is not provided at a position toward which the generated gas is ejected, and thus, momentum in a directly opposite direction from the ejection direction of the gas is not generated in the housing. Therefore, according to the first aspect, displacement of the housing in a direction opposite the ejection direction of the gas may be prevented at the time of discharge of the gas.

A second, obligatory aspect of the present disclosure is the flavor inhaler according to the first aspect, where the housing includes a first surface in which the ventilation hole is provided, and a second surface that is connected to the first surface, and the defining portion defines the ejection direction of the gas such that the gas is ejected from the power source toward the second surface.

In the second aspect described above, gas that is generated inside the power source housed in the housing collides with the second surface of the housing, and is then discharged from the ventilation hole provided in the first surface that is continuous to the second surface. Therefore, according to the second aspect, because the gas is caused to collide with the second surface of the housing that includes the first surface in which the ventilation hole is provided and the second surface different from the first surface, force of the gas may be reduced compared to a configuration of ejecting the gas directly from the ventilation hole.

A third aspect of the present disclosure is the flavor inhaler according to the second aspect, where the ventilation hole is provided in the first surface, near an intersecting point of the ejection direction of the gas and the second surface.

In the third aspect described above, gas that is generated inside the power source housed in the housing collides with the second surface of the housing, and is then discharged from the ventilation hole in the first surface that is positioned in a periphery of a part of the second surface with which the gas collided. Therefore, according to the third aspect, by causing the gas colliding with the second surface to be discharged from the ventilation hole positioned in the periphery of the collision part, the gas may be effectively attenuated and discharged.

A fourth aspect of the present disclosure is the flavor inhaler according to the second and third aspects, where the second surface includes a first part in which an opening that allows insertion of a consumable is provided, and a second part that faces the first part, and the ejection direction of the gas is a direction extending toward the second part of the second surface.

In the fourth aspect described above, gas generated inside the power source housed in the housing collides with the second part of the second surface of the housing disposed at a position opposite the first part in which the opening that allows insertion of a consumable is provided, and is then discharged from the ventilation hole in the first surface. Therefore, according to the fourth aspect, gas may be ejected in an opposite direction from the opening where the face of a user is brought close to.

A fifth aspect of the present disclosure is the flavor inhaler according to the fourth aspect, where the defining portion includes a gas ejection portion provided at the power source, and a distance between the gas ejection portion and the first part is greater than a distance between the gas ejection portion and the second part.

In the fifth aspect described above, for example, the gas ejection portion is disposed at one end of the power source that is at a position closer to the second part of the second surface of the housing than to the first part of the second surface, the first part being where the opening that allows insertion of a consumable is provided, the second part being at a position opposite the first part. As a result, the ejection direction of gas is defined by the gas ejection portion, and the gas is ejected toward the second part of a side wall. Therefore, according to the fifth aspect, gas may be ejected in an opposite direction from the opening where the face of a user is brought close to.

A sixth aspect of the present disclosure is the flavor inhaler according to the fifth aspect, where the gas ejection portion is a thin-walled portion or an aperture portion provided in one end of the power source.

In the sixth aspect described above, the thin-walled portion or the aperture portion is provided at one end of the power source that is at a position closer to the second part of the second surface of the housing than to the first part of the side wall, the first part being where the opening that allows insertion of a consumable is provided, the second part being at a position opposite the first part. Gas may be ejected when the thin-walled portion breaks, for example, or from the aperture portion that is provided in advance. That is, the thin-walled portion or the aperture portion functions as the gas ejection portion that defines the ejection direction of gas. Therefore, according to the sixth aspect, gas may be ejected in an opposite direction from the opening where the face of a user is brought close to.

A seventh aspect of the present disclosure is the flavor inhaler according to the second to sixth aspects, the flavor inhaler further including an external cover that covers the first surface.

In the seventh aspect described above, the first surface in which a discharge hole for discharging gas that is generated inside the power source housed in the housing is provided is further covered by the external cover. Therefore, according to the seventh aspect, a space that is formed between the first surface and the external cover functions as a buffer for receiving gas that is discharged, and the gas may be cooled. Additionally, the external cover may be detachable. Moreover, according to the seventh aspect, because the external cover covers the first surface, dust and foreign substances may be prevented from entering through the ventilation hole provided in the first surface.

An eighth aspect of the present disclosure is the flavor inhaler according to the first to seventh aspects, where the ventilation hole includes a plurality of holes that are adjacent to each other.

In the eighth aspect described above, the discharge hole for discharging gas that is generated inside the power source housed in the housing includes a plurality of holes that are adjacent to each other. Therefore, according to the eighth aspect, gas may be effectively discharged from inside the housing. Moreover, in the case where a plurality of ventilation holes with a small radius are disposed, dust and the like may be prevented from entering.

A ninth aspect of the present disclosure is the flavor inhaler according to the first to eighth aspects, the flavor inhaler further including a lid portion that covers the ventilation hole, where the lid portion comes off to open the ventilation hole at a time of discharge of the gas from the ventilation hole.

In the ninth aspect described above, the ventilation hole is normally blocked unless the lid portion comes off at a time of ejection of gas or the like, and dust and the like may be better prevented from entering.

### BRIEF DESCRIPTION OF DRAWINGS

[Fig. 1A] Fig. 1A is a schematic front view of a flavor inhaler according to the present disclosure.
[Fig. 1B] Fig. 1B is a schematic top view of the flavor inhaler according to the present disclosure.
[Fig. 1C] Fig. 1C is a schematic bottom view of the flavor inhaler according to the present disclosure.
[Fig. 2] Fig. 2 is a schematic cross-sectional side view of a consumable.
[Fig. 3A] Fig. 3A is a front view of the flavor inhaler from which an outer housing is removed.
[Fig. 3B] Fig. 3B is a cross-sectional view of the flavor inhaler taken along arrows 3B-3B shown in Fig. 1B.
[Fig. 3C] Fig. 3C is a front perspective view of a power source.
[Fig. 4A] Fig. 4A is a perspective view of a chamber.
[Fig. 4B] Fig. 4B is a cross-sectional view of the chamber taken along arrows 4B-4B shown in Fig. 4A.
[Fig. 5A] Fig. 5A is a cross-sectional view of the chamber taken along arrows 5A-5A shown in Fig. 4B.
[Fig. 5B] Fig. 5B is a cross-sectional view of the chamber taken along arrows 5B-5B shown in Fig. 4B.
[Fig. 6] Fig. 6 is a perspective view of the chamber and a heating unit.
[Fig. 7] Fig. 7 is a cross-sectional view shown in Fig. 5B, where the consumable is disposed at a desired position inside the chamber.
[Fig. 8] Fig. 8 is a partial cross-sectional view of the flavor inhaler taken along arrows 8-8 shown in Fig. 1B.
[Fig. 9] Fig. 9 is a side perspective view of the flavor inhaler from which the outer housing is removed, Fig. 9 schematically showing a flow of gas.

### DESCRIPTION OF EMBODIMENTS

Hereinafter, an embodiment of the present disclosure will be described with reference to the drawings. In the drawings described below, same or corresponding structural elements will be denoted by a same reference sign, and redundant description thereof will be omitted.

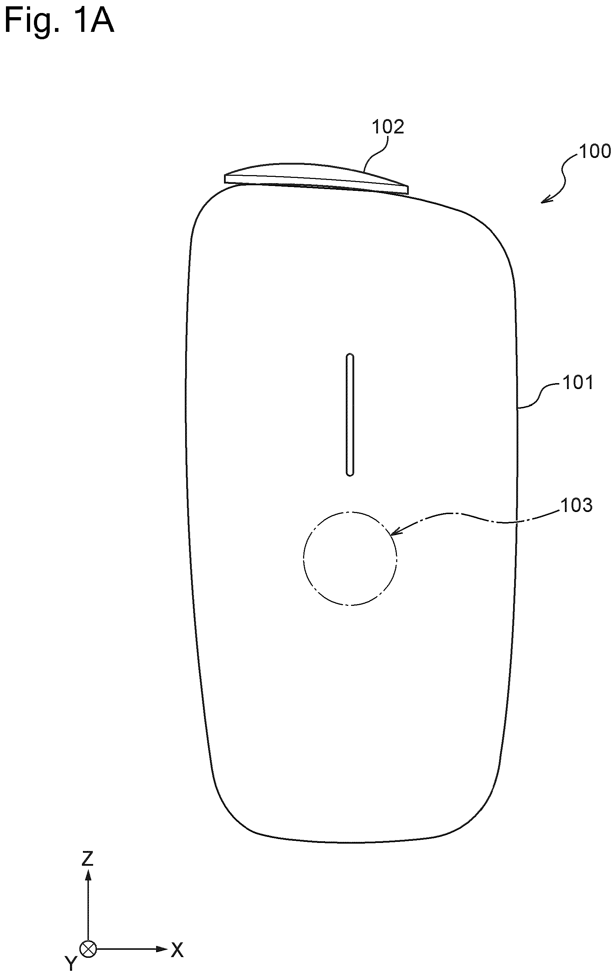

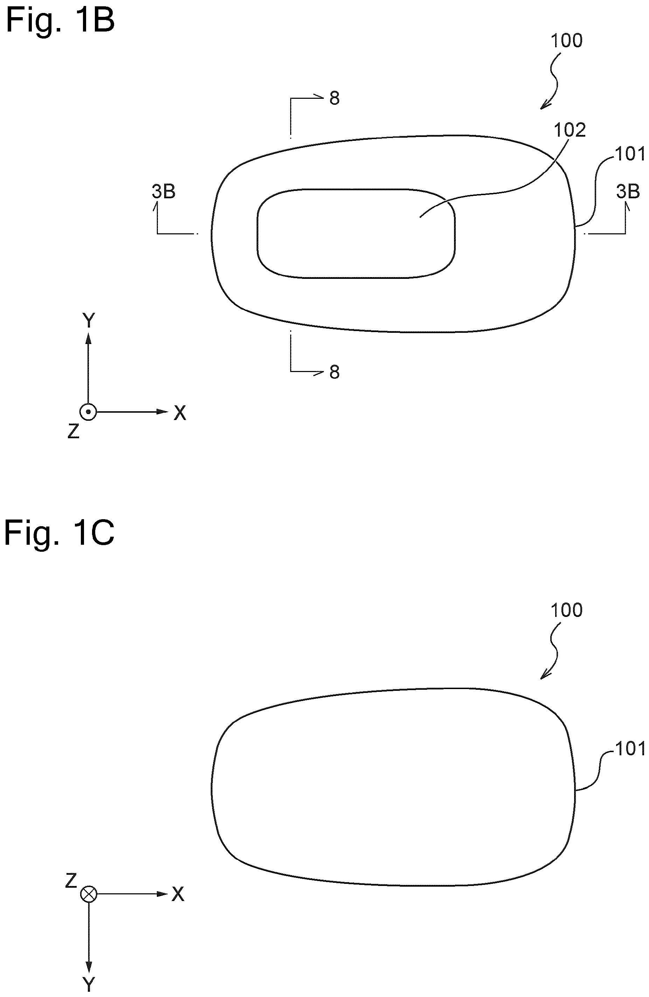

Fig. 1A is a schematic front view of a flavor inhaler 100 according to the present disclosure. Fig. 1B is a schematic top view of the flavor inhaler 100 according to the present disclosure. Fig. 1C is a schematic bottom view of the flavor inhaler 100 according to the present disclosure. In the drawings described in the present specification, an X-Y-Z orthogonal coordinate system may be added for the sake of description. In the coordinate system, a Z-axis faces vertically upward, an X-Y plane cuts the flavor inhaler 100 in a horizontal direction, and a Y-axis extends from a front surface to a back surface of the flavor inhaler 100. The Z-axis may also be said to be an insertion direction of a consumable that is to be housed in a chamber 50 of an atomizing unit 30 described later. Furthermore, the Y-axis may also be said to be a direction that is orthogonal to the insertion direction of the consumable and along which a first wall 10a and a second wall 10b described later face each other. Moreover, an X-axis direction may be said to be a device longitudinal direction on a plane that is orthogonal to the insertion direction of the consumable. A Y-axis direction may be said to be a device transverse direction on the plane that is orthogonal to the insertion direction of the consumable.

For example, the flavor inhaler 100 according to the present disclosure generates an aerosol including a flavor by heating a stick-shaped consumable including a flavor source including an aerosol source.

As shown in Figs. 1A to 1C, the flavor inhaler 100 includes an outer housing 101, a slide cover 102, and a switch unit 103. The outer housing 101 forms an outermost housing of the flavor inhaler 100, and has a size that can be fitted in a hand of a user. At the time of using the flavor inhaler 100, a user may hold the flavor inhaler 100 in the hand, and may inhale the aerosol. The outer housing 101 may be formed by assembling a plurality of members. The outer housing 101 may be formed by assembling a plurality of members. The outer housing 101 may be formed of resin such as polycarbonate, acrylonitrile-butadiene-styrene (ABS) resin, polyether ether ketone (PEEK), or a polymer alloy containing a plurality of types of polymers, or metal such as aluminum. The outer housing 101 is an example of an external cover of the present disclosure.

The outer housing 101 includes an opening, not shown, for receiving a consumable, and the slide cover 102 is slidably attached to the outer housing 101 to close the opening. More specifically, the slide cover 102 is movable along an outer surface of the outer housing 101, between a close position of closing the opening in the outer housing 101 (a position shown in Figs. 1A and 1B) and an open position of opening the opening. For example, the slide cover 102 may be moved between the close position and the open position by the user manually operating the slide cover 102. The slide cover 102 may thus allow or restrict access of the consumable into the flavor inhaler 100.

The switch unit 103 is used to switch between on and off of operation of the flavor inhaler 100. For example, as described later, when a user operates the switch unit 103 in a state where the consumable is inserted in the flavor inhaler 100, power may be supplied from a power source 21 to a heating unit 40, and the consumable may be heated without being burnt. Additionally, the switch unit 103 may be a switch that is provided outside the outer housing 101, or may be a switch positioned inside the outer housing 101. In the case where the switch is positioned inside the outer housing 101, the switch is indirectly pressed when the switch unit 103 on a surface of the outer housing 101 is pressed. In the present disclosure, an example is described where the switch of the switch unit 103 is positioned inside the outer housing 101.

The flavor inhaler 100 may further include a terminal, not shown. The terminal may be an interface for connecting the flavor inhaler 100 to an external power source, for example. In the case where the power source of the flavor inhaler 100 is a rechargeable battery, current may be supplied from the external power source to the power source and the power source may be charged when the external power source is connected to the terminal. Furthermore, the flavor inhaler 100 may be formed such that, by connecting a data transmission cable to the terminal, data about operation of the flavor inhaler 100 may be transmitted to an external device.

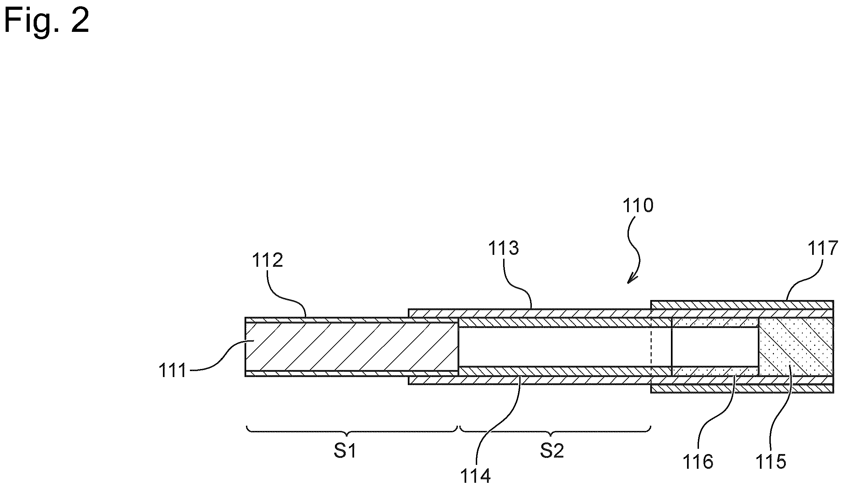

Next, a consumable that is used with the flavor inhaler 100 according to the present disclosure will be described. Fig. 2 is a schematic cross-sectional side view of a consumable 110. In the present disclosure, a smoking system may be formed by the flavor inhaler 100 and the consumable 110. In the example shown in Fig. 2, the consumable 110 includes a smokable substance 111, a cylindrical member 114, a hollow filter portion 116, and a filter portion 115. The smokable substance 111 is wrapped with a first rolling paper 112. The cylindrical member 114, the hollow filter portion 116, and the filter portion 115 are wrapped with a second rolling paper 113 different from the first rolling paper 112. The second rolling paper 113 is also wrapped around a part of the first rolling paper 112 that is wrapped around the smokable substance 111. The cylindrical member 114, the hollow filter portion 116, and the filter portion 115 are thus joined to the smokable substance 111. Additionally, the second rolling paper 113 may be omitted, and the cylindrical member 114, the hollow filter portion 116, and the filter portion 115 may instead be joined to the smokable substance 111 using the first rolling paper 112. A lip release agent 117 is applied on an outer surface of the second rolling paper 113, around an end portion on the filter portion 115 side, to prevent lips of the user from sticking to the second rolling paper 113. The part of the consumable 110 where the lip release agent 117 is applied functions as a mouthpiece of the consumable 110.

The smokable substance 111 may include a flavor source, such as tobacco, and an aerosol source, for example. Furthermore, the first rolling paper 112 wrapped around the smokable substance 111 may be a breathable sheet member. The cylindrical member 114 may be a paper tube or a hollow filter. In the example shown in Fig. 2, the consumable 110 includes the smokable substance 111, the cylindrical member 114, the hollow filter portion 116, and the filter portion 115, but the structure of the consumable 110 is not limited thereto. For example, the hollow filter portion 116 may be omitted, and the cylindrical member 114 and the filter portion 115 may be disposed next to each other.

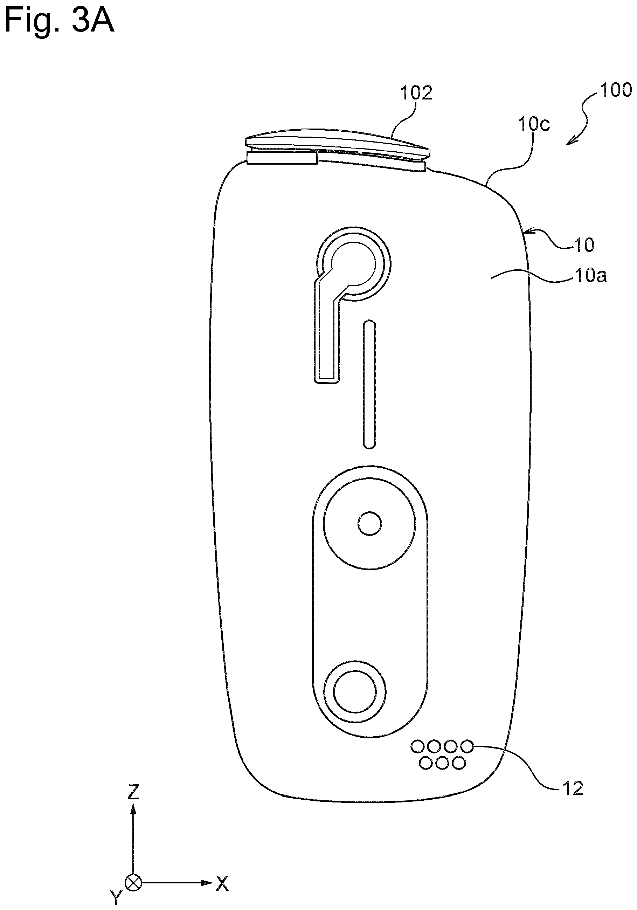

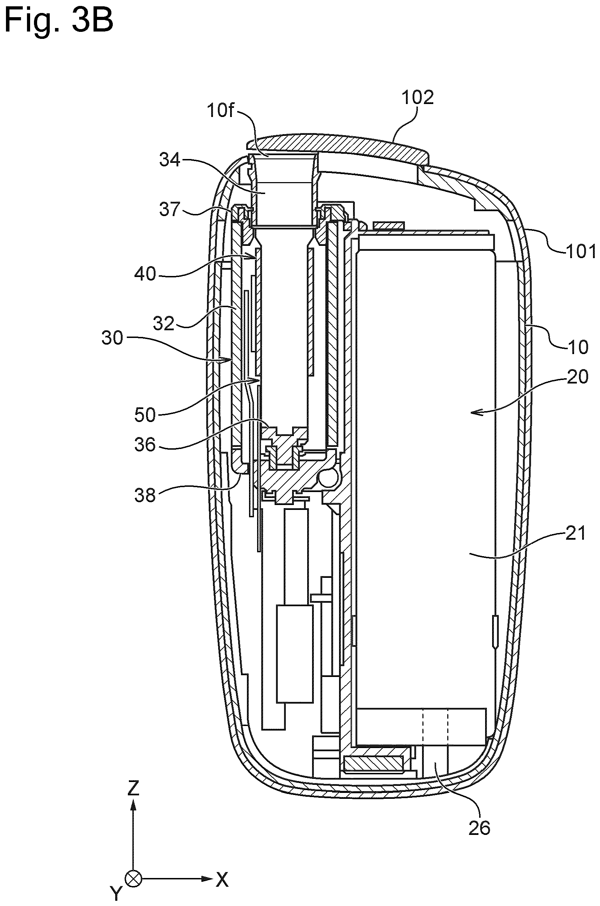

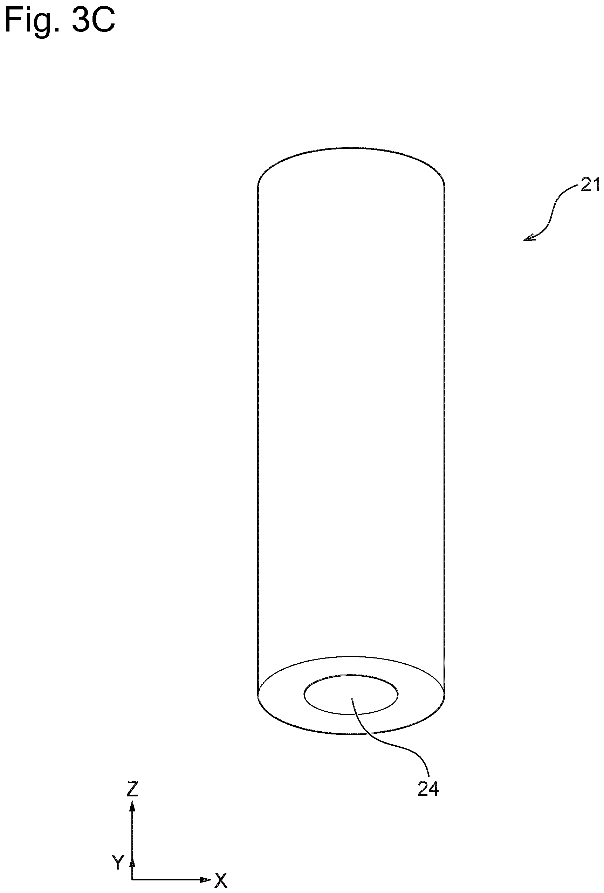

Next, an internal structure of the flavor inhaler 100 will be described. Fig. 3A is a front view of the flavor inhaler 100 from which the outer housing 101 is removed. Fig. 3B is a cross-sectional view of the flavor inhaler 100 taken along arrows 3B-3B shown in Fig. 1B. Fig. 3C is a front perspective view of the power source 21 that is housed in an inner housing 10.

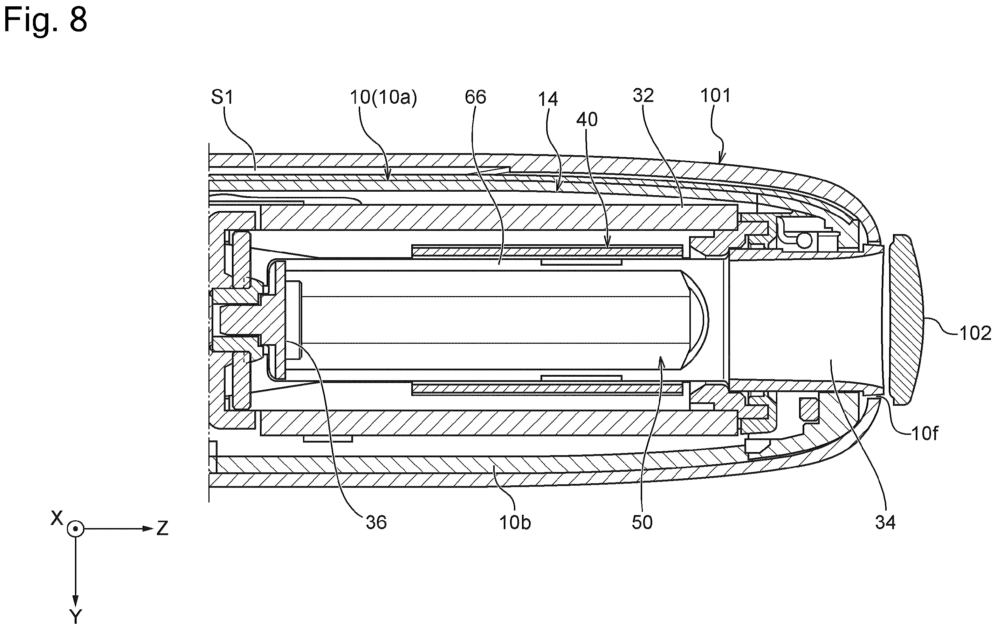

As shown in Fig. 3A, when the outer housing 101 is removed, the inner housing 10 is exposed. As shown in Fig. 3B, the inner housing 10 houses the atomizing unit 30 and a power source unit 20, and may be formed of resin such as polycarbonate, ABS resin, PEEK, or a polymer alloy containing a plurality of types of polymers, or metal such as aluminum. From the standpoint of heat resistance and strength, the inner housing 10 is desirably formed of PEEK. However, the material of the inner housing 10 is not limited thereto. The inner housing 10 includes the first wall 10a and the second wall 10b (see Fig. 8) that face each other in the Y-axis direction, and a side wall 10c that connects the first wall 10a and the second wall 10b. Fig. 3A shows the first wall 10a and the side wall 10c. The inner housing 10 is an example of a housing of the present disclosure. The first wall 10a of the inner housing 10 is an example of a first surface of the present disclosure. The side wall 10c of the inner housing 10 is an example of a second surface of the present disclosure.

Particularly, as shown in Fig. 3A, vent holes 12 including a plurality of holes that are adjacent to each other are formed in the first wall 10a of the inner housing 10, near an end portion on a Z-axis negative direction side. For example, the vent holes 12 may be disposed near an end portion of the first wall 10a on an X-axis positive direction side (that is, a position corresponding to the power source 21 shown in Fig. 3B). The vent holes 12 function as an opening portion for allowing air to flow between inside and outside of the inner housing 10. The vent holes 12 in the inner housing 10 are an example of a ventilation hole of the present disclosure.

Additionally, for example, the inner housing 10 may be formed as a member integrating the second wall 10b and the side wall 10c, where an opening portion of the member is closed by the first wall 10a. When the inner housing 10 is formed in such a manner, strength is increased as a whole, and an advantageous effect of reducing force of gas, as described later, may be better achieved.

The power source unit 20 includes the power source 21. For example, the power source 21 may be a rechargeable battery or a non-rechargeable battery. The power source 21 is electrically connected to the atomizing unit 30. The power source 21 may thus supply power to the atomizing unit 30 so that the consumable 110 is appropriately heated. The type of the power source 21 is not limited to specific types, and any known power source used in any known flavor inhaler may be used. For example, a lithium-ion battery may be used as the power source 21.

As shown in Fig. 3B, the atomizing unit 30 includes the chamber 50 extending in the insertion direction of the consumable 110 (the Z-axis direction), the heating unit 40 surrounding a part of the chamber 50, a heat insulating portion 32, and an insertion guide member 34 having a substantially cylindrical shape. The chamber 50 houses the consumable 110. The heating unit 40 is in contact with an outer circumferential surface of the chamber 50, and the heating unit 40 heats the consumable 110 that is housed in the chamber 50. Details of the chamber 50 will be given later.

The heat insulating portion 32 is substantially cylindrical as a whole, and is disposed to surround the chamber 50. The heat insulating portion 32 may include an aerogel sheet, for example. The insertion guide member 34 is formed of a resin material such as polycarbonate, PEEK, or ABS, and is provided between the slide cover 102 in the close position and the chamber 50. When the slide cover 102 is in the open position, the insertion guide member 34 communicates with outside of the flavor inhaler 100, and guides insertion of the consumable 110 into the chamber 50 when the consumable 110 is inserted in the insertion guide member 34.

The flavor inhaler 100 further includes a first holding portion 37 and a second holding portion 38 for supporting both ends of the chamber 50 and the heat insulating portion 32. The first holding portion 37 is disposed to support end portions of the chamber 50 and the heat insulating portion 32 on the slide cover 102 side (a Z-axis positive direction side). Furthermore, the second holding portion 38 is disposed to directly or indirectly support end portions of the chamber 50 and the heat insulating portion 32 on a Z-axis negative direction side. Moreover, as shown in Fig. 3B, a bottom member 36 may be provided on a bottom part of the chamber 50. The bottom member 36 may function as a stopper for positioning the consumable 110 that is inserted in the chamber 50. The bottom member 36 is uneven at a surface where the consumable 110 abuts against, and may demarcate a space where air can be supplied, in the surface where the consumable 110 abuts against. The bottom member 36 is uneven at the surface where the consumable 110 abuts against, and may, but not limited to, be formed of a resin material such as PEEK, metal, glass, or ceramic. Furthermore, the first support portion 37 and the second support portion 38 may be formed of elastomer such as silicone rubber, for example. Moreover, in the case of joining the bottom member 36 to the bottom portion of the chamber 50, an adhesive that may be made of a resin material such as epoxy resin, or an organic material may be used.

Particularly, as shown in Fig. 3C, a thin-walled portion 24 is formed on the power source 21, on an end portion on the Z-axis negative direction side. The thin-walled portion 24 may alternatively be formed as an aperture portion. Additionally, the power source 21 is entirely housed inside the inner housing 10, and thus, by providing the thin-walled portion 24 on an end portion of the power source 21, an ejection direction of gas from inside the power source 21 may be defined. The thin-walled portion 24 of the power source 21 is, but not limited to be, an example of a defining portion and a gas ejection portion of the present disclosure. Additionally, the thin-walled portion of the present disclosure is a part of the power source 21 that is formed thinner than other parts and that is more vulnerable to external force, and is a part where the thin-walled portion is torn and gas is ejected when an atmospheric pressure of the gas inside the power source 21 is increased.

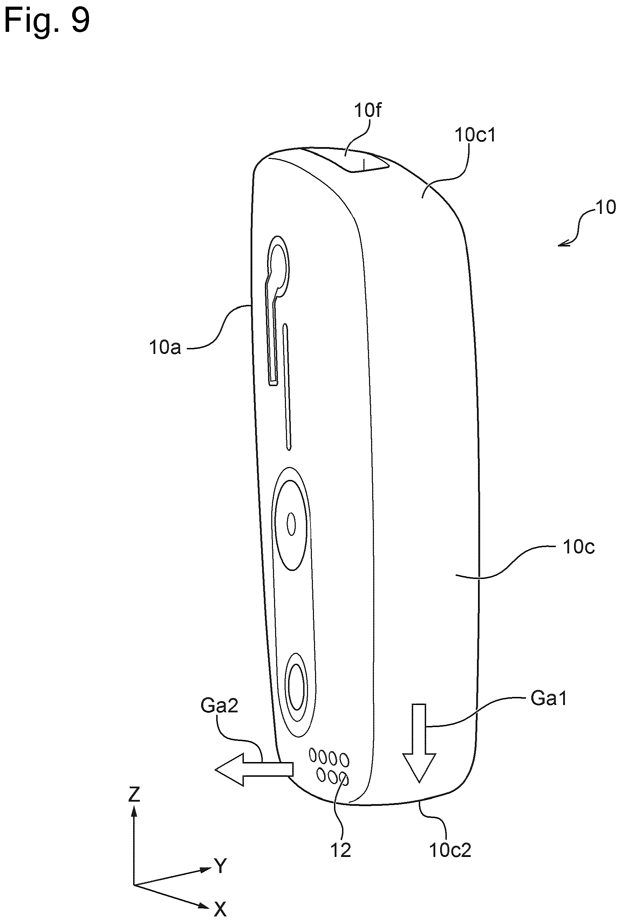

As shown in Fig. 3B, an opening 10f that allows insertion of the consumable 110 is provided in a surface of the side wall 10c of the inner housing 10 on the Z-axis positive direction side (a first part 10c1 shown in Fig. 9 described later), the opening 10f communicating with an opening, not shown, in the outer housing 101 and an opening 52 in the chamber 50.

Furthermore, as shown in Fig. 3B, a guide portion 26, described later, for restricting a flowing direction of gas may be provided inside the inner housing 10, in a region that is sandwiched between the power source 21 and the side wall 10c.

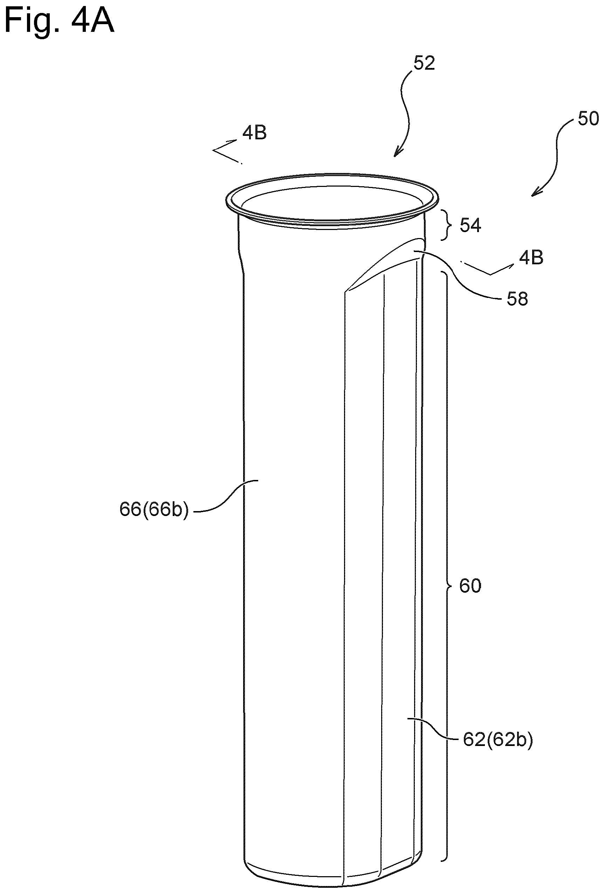

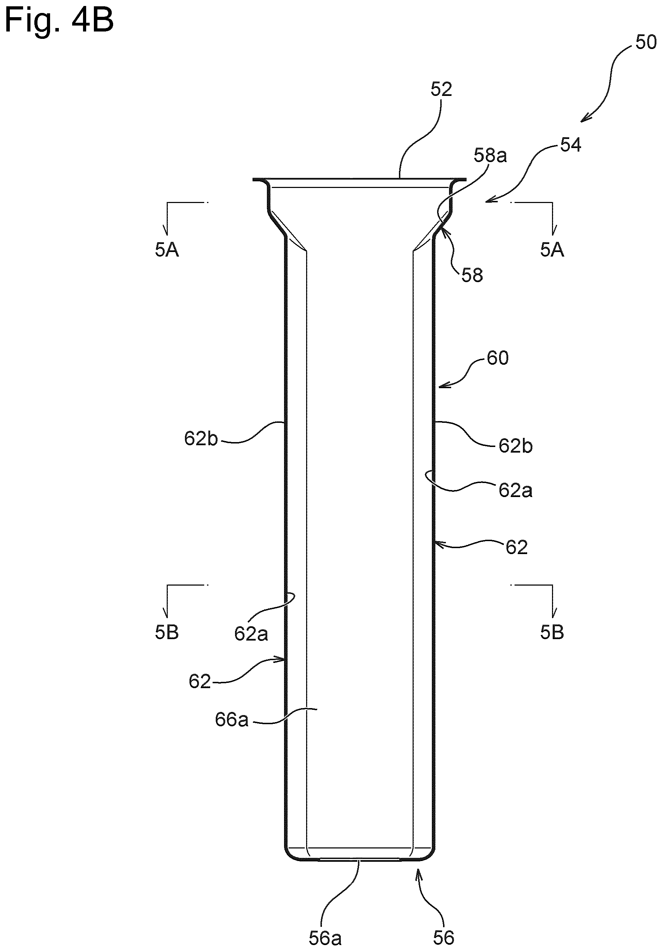

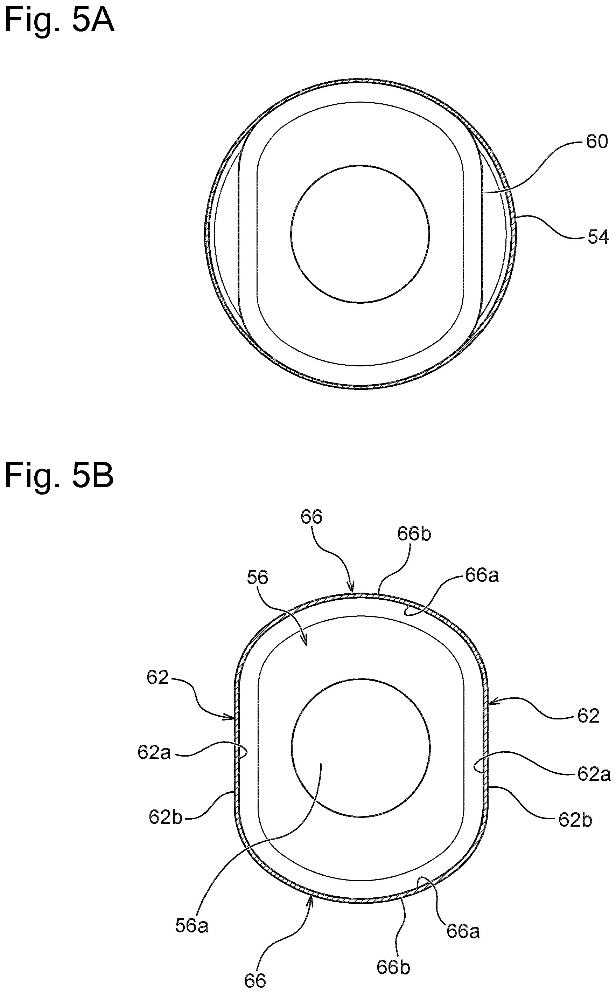

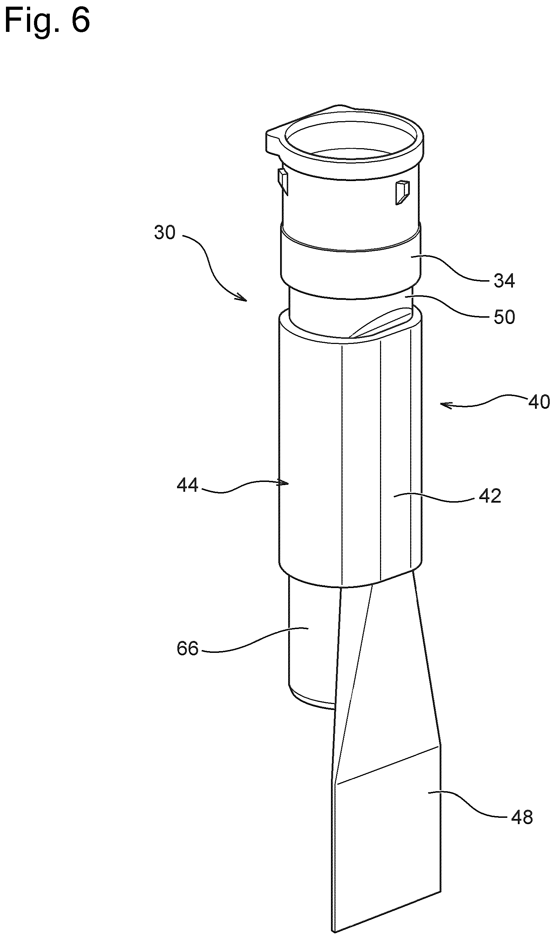

Next, a structure of the chamber 50 will be described. Fig. 4A is a perspective view of the chamber 50. Fig. 4B is a cross-sectional view of the chamber 50 taken along arrows 4B-4B shown in Fig. 4A. Fig. 5A is a cross-sectional view of the chamber 50 taken along arrows 5A-5A shown in Fig. 4B. Fig. 5B is a cross-sectional view of the chamber 50 taken along arrows 5B-5B shown in Fig. 4B. Fig. 6 is a perspective view of the chamber 50 and the heating unit 40. As shown in Figs. 4A and 4B, the chamber 50 may be a cylindrical member including an opening 52 through which the consumable 110 is inserted, and a cylindrical side wall portion 60 for housing the consumable 110. The chamber 50 is desirably formed of a material that has heat resistance and that has small thermal expansion coefficient, and may be formed of metal such as stainless steel, resin such as PEEK, glass, ceramic or the like, for example. The consumable 110 may thus be efficiently heated in the chamber 50.

As shown in Figs. 4B and 5B, the side wall portion 60 includes a flat portion 62 and a curved portion 66. When the consumable 110 is disposed at a desired position inside the chamber 50, the flat portion 62 contacts or presses a part of the consumable 110, and the curved portion 66 is separate from the consumable 110. Additionally, in the present specification, "desired position inside the chamber 50" refers to a position where the consumable 110 is appropriately heated, or a position of the consumable 110 when the user smokes. The flat portion 62 includes a flat inner surface 62a and a flat outer surface 62b. The curved portion 66 includes an inner surface 66a and an outer surface 66b. As shown in Fig. 6, the heating unit 40 is disposed on the outer surface 62b of the flat portion 62. The heating unit 40 is desirably disposed on the outer surface 62b of the flat portion 62 with no gap in between. Additionally, the heating unit 40 may include an adhesive layer. In this case, the heating unit 40 including the adhesive layer is desirably disposed on the outer surface 62b of the flat portion 62 with no gap in between.

In the case where a strip-shaped electrode 48 is connected to the heating unit 40 disposed on the outer surface 62b of the flat portion 62 as shown in Fig. 6, because the outer surface 62b of the flat portion 62 is flat, the strip-shaped electrode 48 may be prevented from being warped. Furthermore, as shown in Figs. 4B and 5B, a thickness of the flat portion 62 is uniform.

As shown in Figs. 4A, 4B, and 5B, the chamber 50 includes two flat portions 62 in a circumferential direction of the chamber 50, and the pair of flat portions 62 are parallel to each other. A distance between at least parts of the inner surfaces 62a of the pair of flat portions 62 is desirably smaller than a width of a part where the consumable 110 that is inserted in the chamber 50 is disposed between the flat portions 62.

As shown in Fig. 5B, the inner surface 66a of the curved portion 66 may have, as a whole, an arc-shaped cross-section on a plane orthogonal to a longitudinal direction (the Z-axis direction) of the chamber 50. Furthermore, the curved portion 66 is disposed adjacent to the flat portions 62 in the circumferential direction. In other words, the curved portion 66 connects end portions of the pair of flat portions 62.

As shown in Fig. 4B, the chamber 50 may include a hole 56a in a bottom portion 56 to allow the bottom member 36 shown in Fig. 3 to penetrate and be disposed inside the chamber 50. The bottom member 36 may be fixed on an inside of the bottom portion 56 of the chamber 50 by an adhesive or the like. The bottom member 36 provided on the bottom portion 56 may support a part of the consumable 110 that is inserted in the chamber 50 in such a way that at least a part of an end surface of the consumable 110 is exposed.

As shown in Figs. 4A and 4B, the chamber 50 desirably includes a cylindrical portion 54 between the opening 52 and the side wall portion 60. A gap may be formed between the cylindrical portion 54 and the consumable 110 in a state where the consumable 110 is positioned at the desired position inside the chamber 50. Furthermore, as shown in Figs. 4A and 4B, the chamber 50 desirably includes a guide portion 58 including a tapered surface 58a that connects an inner surface of the cylindrical portion 54 and the inner surfaces 62a of the flat portions 62.

As shown in Fig. 6, the heating unit 40 includes a heating element 42. The heating element 42 may be a heating track, for example. The heating element 42 may be provided on an outer surface or an inner surface of the chamber 50. The heating element 42 is desirably disposed to heat the flat portion 62 without coming into contact with the curved portion 66 of the chamber 50. In other words, the heating element 42 is desirably disposed only on the outer surface of the flat portion 62. The heating element 42 may include a part for heating the curved portion 66 of the chamber 50 and a part for heating the flat portion 62, and heating capacity may be different between the parts. More specifically, the heating element 42 may heat the flat portion 62 to a temperature higher than that of the curved portion 66. For example, an arrangement density of the heating track of the heating element 42 may be adjusted between the flat portion 62 and the curved portion 66. Furthermore, the heating element 42 may have substantially same heating capacity along an entire circumference of the chamber 50, and may be wound around an outer circumference of the chamber 50. As shown in Fig. 6, in addition to the heating element 42, the heating unit 40 desirably includes an electrically insulating member 44 that covers at least one surface of the heating element 42. In the present disclosure, the electrically insulating member 44 is disposed to cover both surfaces of the heating element 42.

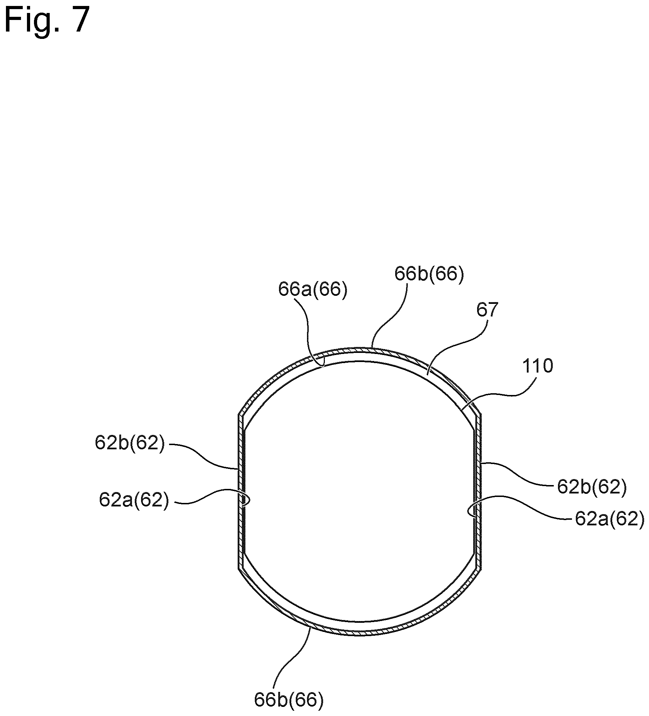

Fig. 7 is a cross-sectional view shown in Fig. 5B, where the consumable 110 is disposed at the desired position inside the chamber 50. As shown in Fig. 7, when the consumable 110 is disposed at the desired position inside the chamber 50, the consumable 110 may be pressed by coming into contact with the flat portion 62 of the chamber 50. A gap 67 is formed between the consumable 110 and the curved portion 66. The gap 67 may communicate with the opening 52 in the chamber 50 and an air passage between the end surface of the consumable 110 positioned inside the chamber 50 and the bottom member 36. Accordingly, air flowing in from the opening 52 in the chamber 50 may pass through the gap 67 and flow into the consumable 110. In other words, an air passage (the gap 67) is formed between the consumable 110 and the curved portion 66.

Next, an arrangement position and an arrangement mode of the atomizing unit 30 inside the inner housing 10 will be described. Fig. 8 is a partial cross-sectional view of the flavor inhaler 100 taken along arrows 8-8 shown in Fig. 1B.

As described above, with the flavor inhaler 100 of the present disclosure, an air passage (the gap 67) is formed between the curved portion 66 and the consumable 110, and thus, air passing through the air passage may absorb heat from the curved portion 66 and cool the curved portion 66.

As described above, the heating element 42 of the heating unit 40 is disposed in such a way as to heat the flat portion 62 without coming into contact with the curved portion 66 of the side wall portion 60 of the chamber 50. That is, because the curved portion 66 is not directly heated by the heating unit 40, heating of the curved portion 66 by the heating unit 40 may be suppressed.

As shown in Fig. 8, the outer housing 101 houses the inner housing 10 inside. An inner surface (a surface on a Y-axis positive direction side) of a front cover of the outer housing 101 faces an outer surface (a surface on a Y-axis negative direction side) of the first wall 10a of the inner housing 10. Because the first wall 10a of the inner housing 10 is covered by the front cover of the outer housing 101, heat from the atomizing unit 30 that is transferred to the first wall 10a of the inner housing 10 may be prevented from being transferred to the outside of the flavor inhaler 100. As a result, the user may be prevented from feeling uncomfortable when holding the flavor inhaler 100.

Next, ejection of gas inside the inner housing 10 will be described. Fig. 9 is a side perspective view of the flavor inhaler 100 from which the outer housing 101 is removed, Fig. 9 schematically showing a flow of gas. Arrows Ga1 and Ga2 in Fig. 9 indicate the flow of gas. Moreover, Fig. 9 shows the first part 10c1 that is a surface of the side wall 10c of the inner housing 10, on the Z-axis positive direction side, and a second part 10c2 that is a surface on the Z-axis negative direction side.

For example, there may possibly be a case where a flow of gas is generated inside the power source 21 due to some trouble with the power source 21. As shown in Fig. 3C, the power source 21 includes the thin-walled portion 24, and gas that is generated is ejected from the thin-walled portion 24. In this case, as shown in Fig. 9, the flow Ga1 of gas that flows in the Z-axis negative direction from the thin-walled portion 24 of the power source 21 is generated. The flow Ga1 of gas collides with the second part 10c2 that is a surface of the side wall 10c of the inner housing 10 on the Z-axis negative direction side. A vector of a half line of the flow Ga1 of gas extending in the Z-axis negative direction (that is, a half line that originates from the thin-walled portion 24 of the power source 21 as a starting point and that passes through the second part 10c2 of the side wall 10c of the inner housing 10) is an example of an ejection direction of gas of the present disclosure. The ejection direction of gas in the present disclosure refers to a half line that originates from an ejection position of gas as a starting point and that is oriented in the ejection direction of gas.

As described above, the flow Ga1 of gas moves along the ejection direction of gas and collides with the second part 10c2 of the side wall 10c of the inner housing 10. As a result of collision, a flow velocity of gas is reduced, and a direction of flow is changed. The flow velocity of the gas after collision includes components that are oriented in various directions. As shown in Fig. 9, of the flow of gas that is formed after collision, the flow Ga2 of gas that flows toward the vent holes 12 provided in the first wall 10a of the inner housing 10 passes through the vent holes 12 to be discharged outside the inner housing 10.

As shown in Fig. 3B, with the flavor inhaler 100 of the present disclosure, the guide portion 26 may be provided near the second part 10c2 of the side wall 10c of the inner housing 10, the guide portion 26 being for restricting direction of the flow velocity of gas after collision. The guide portion 26 may be formed in such a way as to restrict the flow of gas such that the gas flows toward the vent holes 12 after the flow Ga1 of gas collides with the second part 10c2 of the side wall 10c. The guide portion 26 is an example of the defining portion of the present disclosure.

As shown in Figs. 3A and 9, an opening direction of the vent holes 12 faces the Y-axis negative direction side while being substantially parallel to the Y-axis. Furthermore, with the flavor inhaler 100 of the present disclosure, the first wall 10a of the inner housing 10 is formed as a substantially flat surface that extends substantially in parallel with the Z-axis while being orthogonal to the Y-axis. More specifically, to form the flavor inhaler 100 into a smooth shape with no angular portions at corners, the first wall 10a may be formed into a curved shape with a curvature other than zero at a part that is adjacent to the side wall 10c. Figs. 8 and 9 show an example of peripheries of the end portions of the first wall 10a on the Z-axis positive and negative direction sides.

Furthermore, Fig. 9 shows an example of a periphery of the end portion of the first wall 10a of the inner housing 10 on the X-axis positive direction side. The end portion of the first wall 10a on the X-axis positive direction side is connected to the first part 10c1 that is the surface of the side wall 10c on the Z-axis positive direction side. The opening 10f that allows insertion of the consumable 110 is provided in the first part 10c1 of the side wall 10c, the opening 10f communicating with the opening, not shown, in the outer housing 101 and the opening 52 in the chamber 50. The first part 10c1 of the side wall 10c faces the second part 10c2 that is the surface of the side wall 10c on the Z-axis negative direction side.

As shown in Fig. 3A, with the flavor inhaler 100 of the present disclosure, the vent holes 12 are provided in the periphery of the end portion of the first wall 10a of the inner housing 10 on the Z-axis negative direction side and the X-axis positive direction side, or in other words, on a lower side of the power source 21 in the inner housing 10 and in the periphery of the second part 10c2. As shown in Figs. 3A, 3B, and 3C, the vent holes 12 are provided at a position shifted in the Y-axis direction from the thin-walled portion 24 of the power source 21. In other words, the vent holes 12 are provided intersecting a projection, on the first wall 10a, of the flow Ga1 of gas flowing from the thin-walled portion 24 of the power source 21 toward the second part 10c2 of the side wall 10c.

The flow Ga1 of gas is clearly not in parallel with the flow Ga2 of gas, and the direction of the flow Ga1 of gas intersects the direction of the flow Ga2 of gas. More specifically, as shown in Fig. 9, the flow Ga1 of gas is substantially orthogonal to the flow Ga2 of gas. This is an example of intersection of the ejection direction of gas with the opening direction of the ventilation hole according to the present disclosure.

### (Advantageous Effects)

Advantageous effects of the flavor inhaler 100 of the present disclosure will be described. It is assumed that the pressure of gas inside the inner housing 10 of the flavor inhaler 100 of the present disclosure is increased due to some trouble with the power source 21, for example. In the present disclosure, the flow Ga1 of gas, which is generated inside the power source 21 housed in the inner housing 10, is defined by the thin-walled portion 24 intersects the opening direction of the vent holes 12 provided in the inner housing 10. Accordingly, gas that is generated in the power source 21 collides with some part of the inner housing 10 before being discharged from the vent holes 12, and force of the gas is reduced. Accordingly, in the present disclosure, gas inside the housing may be discharged after the pressure is reduced, compared to a configuration where gas is directly ejected from a ventilation hole. When seen from a different point of view, when gas is discharged from the inner housing 10 through the vent holes 12, momentum according to an impulse of the flow of the discharged gas and in an opposite direction from the flow of gas is generated in the inner housing 10 according to the law of momentum conservation. The momentum may possibly move the inner housing 10 in an undesired direction, and is thus desirably small. With the flavor inhaler 100 of the present disclosure, the force of gas that is to be discharged from the vent holes 12 is reduced, and size of the momentum that is generated in the inner housing 10 is also reduced, and thus, undesired displacement of the housing may be prevented. Furthermore, with respect to momentum conservation mentioned above, the vent holes 12 are not provided at a position toward which the generated gas is ejected, and thus, momentum in a directly opposite direction from the ejection direction of the gas is not generated in the inner housing 10. Accordingly, with the flavor inhaler 100 of the present disclosure, displacement of the inner housing 10 in a direction opposite the ejection direction of gas may be prevented at the time of discharge of gas.

Furthermore, with the flavor inhaler 100 of the present disclosure, gas that is generated inside the power source 21 housed in the inner housing 10 collides with the second part 10c2 of the side wall 10c of the inner housing 10 in the form of the flow Ga1 of gas that is defined by the thin-walled portion 24, and is then discharged from the vent holes 12 provided in the first wall 10a that is continuous to the side wall 10c. Because the gas is caused to collide with the side wall 10c of the inner housing 10, force of the gas may be reduced compared to a configuration of ejecting the gas directly from the ventilation hole.

Furthermore, with the flavor inhaler 100 of the present disclosure, gas that is generated inside the power source 21 housed in the inner housing 10 collides with the second part 10c2 of the side wall 10c of the inner housing 10 in the form of the flow Ga1 of gas that is defined by the thin-walled portion 24, and is then discharged from the vent holes 12 provided in the first wall 10a, in a periphery of a projection of the flow Ga1 of gas on the first wall 10a. By causing gas colliding with the second part 10c2 of the side wall 10c of the inner housing 10 to be discharged from the vent holes 12 positioned in the periphery of the second part 10c2 that is a collision part, gas may be effectively attenuated and discharged.

As shown in Figs. 3B and 9, with the flavor inhaler 100 of the present disclosure, the opening 10f in the inner housing 10 that communicates with the opening 52 in the chamber 50 and that allows insertion of the consumable 110 is formed near the first part 10c1 of the side wall 10c of the inner housing 10. At the time of inhalation of the flavor inhaler 100, the face of the user is positioned near the opening 10f, but the flow Ga1 of gas that is ejected from the thin-walled portion 24 of the power source 21 is toward the second part 10c2 of the side wall 10c that is positioned on the opposite side from the first part 10c1. According to such a configuration, in the case where gas is ejected at the time of inhalation of the flavor inhaler 100 due to some trouble with the power source 21, the gas may be ejected in a direction away from the face of the user that is brought close to the opening 10f in the first part 10c1.

Moreover, a distance between the thin-walled portion 24 of the power source 21 where gas is ejected and the first part 10c1 of the side wall 10c of the inner housing 10 is greater than a distance between the thin-walled portion 24 and the second part 10c2 of the side wall 10c. Moreover, gas that is ejected from the thin-walled portion 24 forms the flow Ga1 of gas that flows away from the first part 10c1 where the opening 10f is formed and toward the second part 10c2 that faces the first part 10c1. According to such a configuration, gas may be ejected at the time of inhalation of the flavor inhaler 100 in a direction away from the face of the user that is brought close to the opening 10f in the first part 10c1.

Moreover, as shown in Fig. 3C, the thin-walled portion 24 of the power source 21 where gas is ejected is formed as an aperture portion or a thin-walled portion that is provided in an end portion of the power source 21 in the Z-axis negative direction. The thin-walled portion 24 defines the direction of the flow Ga1 of gas in such a way that the gas flows away from the first part 10c1 where the opening 10f is provided and toward the second part 10c2 that faces the first part 10c1. According to such a configuration, gas may be ejected at the time of inhalation of the flavor inhaler 100 in a direction away from the face of the user that is brought close to the opening 10f in the first part 10c1.

As shown in Fig. 8, the first wall 10a of the inner housing 10 where the vent holes 12 for emitting gas outside the inner housing 10 are provided is covered by the outer housing 101. A space that is formed between the first wall 10a of the inner housing 10 and the outer housing 101 functions as a buffer for receiving gas that is discharged, and may cool the gas. Furthermore, because the outer housing 101 covers the first wall 10a of the inner housing 10, dust and foreign substances may be prevented from entering through the vent holes 12 provided in the first wall 10a.

Furthermore, as shown in Fig. 3A, the vent holes 12 for emitting gas outside the inner housing 10 include a plurality of holes that are provided adjacent to each other in the first wall 10a of the inner housing 10. According to such a configuration, the flow Ga2 of gas is effectively emitted outside the first wall 10a of the inner housing 10 through the vent holes 12.

Furthermore, although not shown, a lid that is attached to the first wall 10a of the inner housing from the Y-axis positive direction side and that covers the vent holes 12 may be provided as an accessory component of the inner housing 10. The lid normally covers the vent holes 12, and prevents dust and the like from entering inside the inner housing 10 through the vent holes 12. However, when pressed by the flow Ga2 of gas, the lid comes off and opens a passage of gas reaching the vent holes 12.

The inner housing 10 is described above to have a substantially cuboid shape. However, the shape of the inner housing is not limited to the substantially cuboid shape. For example, the inner housing may have a substantially columnar shape. With the substantially columnar-shaped inner housing 10 including a top surface, a bottom surface, and a side surface, the flow Ga1 of gas is directed toward the bottom surface, and the vent holes 12 are provided in a side wall, near the bottom surface. In this case, the side surface of the substantially columnar-shaped inner housing 10 is an example of the first surface of the present disclosure. The top surface and the bottom surface of the substantially columnar-shaped inner housing 10 are an example of the second surface of the present disclosure. Furthermore, the top surface of the inner housing 10 is an example of the first part of the present disclosure, and the bottom surface of the inner housing 10 is an example of the second part of the present disclosure.

The flavor inhaler 100 of the present disclosure includes a so-called counter-flow air passage with which air flowing in from the opening 52 in the chamber 50 is supplied to the end surface of the consumable 110, but such a case is not restrictive, and a so-called bottom-flow air passage with which air is supplied from the bottom portion 56 of the chamber 50 into the chamber 50 may instead be provided. Furthermore, the heating element 42 does not have to adopt resistance heating and may instead adopt induction heating. In this case, the heating element 42 may heat the chamber 50 by induction heating. Moreover, in the case where the consumable 110 includes a susceptor, the susceptor of the consumable 110 may be heated by the heating element 42 by induction heating.

### REFERENCE SIGNS LIST

10 inner housing
10a first wall
10b second wall
10c side wall
10c1 first part
10c2 second part
10f opening
12 vent hole
20 power source unit
21 power source
24 thin-walled portion
26 guide portion
30 atomizing unit
32 heat insulating portion
34 insertion guide member
36 bottom member
37 first holding portion
38 second holding portion
40 heating unit
42 heating element
44 electrically insulating member
48 electrode
50 chamber
52 opening
54 cylindrical portion
56 bottom portion
56a hole
58 guide portion
58a tapered surface
60 side wall portion
62 flat portion
62a inner surface
62b outer surface
66 curved portion
66a inner surface
66b outer surface
67 gap
100 flavor inhaler
101 outer housing
102 slide cover
103 switch unit
110 consumable
111 smokable substance
112 first rolling paper
113 second rolling paper
114 cylindrical member
115 filter portion
116 hollow filter portion
117 lip release agent
Ga1 flow of gas
Ga2 flow of gas

## Claims

1. A flavor inhaler (100) comprising:
a housing (10) on which a ventilation hole (12) is provided; and
a power source (21) that is housed in the housing (10), wherein
a defining portion (24, 26) that defines an ejection direction of gas generated inside the power source (21) is formed at at least one of the housing (10) and the power source (21), and
the ventilation hole (12) is not provided at a part of the housing (10) that intersects the ejection direction of the gas, wherein
the housing (10) includes a first surface (10a) in which the ventilation hole (12) is provided, and a second surface (10c) that is connected to the first surface (10a), and
the defining portion (24, 26) defines the ejection direction of the gas such that the gas is ejected from the power source (21) toward the second surface (10c).

2. The flavor inhaler (100) according to claim 1, wherein the ventilation hole (12) is provided in the first surface (10a), near an intersecting point of the ejection direction of the gas and the second surface (10c).

3. The flavor inhaler (100) according to claim 1 or 2, wherein
the second surface (10c) includes a first part (10c1) in which an opening (10f) that allows insertion of a consumable (110) is provided, and a second part (10c2) that faces the first part (10cl), and
the ejection direction of the gas is a direction extending toward the second part (10c2) of the second surface (10c).

4. The flavor inhaler (100) according to claim 3, wherein
the defining portion (24, 26) includes a gas ejection portion (24) provided at the power source (21), and
a distance between the gas ejection portion (24) and the first part (10c1) is greater than a distance between the gas ejection portion (24) and the second part (10c2).

5. The flavor inhaler (100) according to claim 4, wherein the gas ejection portion (24) is a thin-walled portion (24) or an aperture portion provided in one end of the power source (21).

6. The flavor inhaler (100) according to any one of claims 1 to 5, further comprising an external cover (101) that covers the first surface (10a).

7. The flavor inhaler (100) according to any one of claims 1 to 6, wherein the ventilation hole (12) includes a plurality of holes that are adjacent to each other.

8. The flavor inhaler (100) according to any one of claims 1 to 7, further comprising a lid portion that covers the ventilation hole (12), wherein
the lid portion comes off to open the ventilation hole (12) at a time of discharge of the gas from the ventilation hole (12).

## Patentansprüche

1. Geschmacksinhalator (100), umfassend:
ein Gehäuse (10), an dem eine Belüftungsöffnung (12) bereitgestellt ist; und
eine Stromquelle (21), die in dem Gehäuse (10) eingehaust ist, wobei
ein Definitionsabschnitt (24, 26), der die Ausstoßrichtung eines innerhalb der Stromquelle (21) erzeugten Gases definiert, an mindestens einem von dem Gehäuse (10) oder der Stromquelle (21) ausgebildet ist, und
die Belüftungsöffnung (12) nicht an einem Teil des Gehäuses (10) bereitgestellt ist, der die Ausstoßrichtung des Gases schneidet, wobei
das Gehäuse (10) eine erste Oberfläche (10a), in der die Belüftungsöffnung (12) bereitgestellt ist, und eine zweite Oberfläche (10c) einschließt, die mit der ersten Oberfläche (10a) verbunden ist, und
der Definitionsabschnitt (24, 26) die Ausstoßrichtung des Gases derart definiert, dass das Gas aus der Stromquelle (21) in Richtung auf die zweite Oberfläche (10c) ausgestoßen wird.

2. Geschmacksinhalator (100) nach Anspruch 1, wobei die Belüftungsöffnung (12) in der ersten Oberfläche (10a) nahe einem Schnittpunkt zwischen der Ausstoßrichtung des Gases und der zweiten Oberfläche (10c) bereitgestellt ist.

3. Geschmacksinhalator (100) nach Anspruch 1 oder 2, wobei
die zweite Oberfläche (10c) einen ersten Teil (10c1), in dem eine Öffnung (10f) bereitgestellt ist, die das Einführen eines Verbrauchsmaterials (110) ermöglicht, und einen zweiten Teil (10c2) einschließt, der dem ersten Teil (10c1) gegenüberliegt, und
die Ausstoßrichtung des Gases eine Richtung ist, die sich in Richtung des zweiten Teils (10c2) der zweiten Oberfläche (10c) erstreckt.

4. Geschmacksinhalator (100) nach Anspruch 3, wobei
der Definitionsabschnitt (24, 26) einen Gasausstoßabschnitt (24) einschließt, der an der Stromquelle (21) bereitgestellt ist, und
ein Abstand zwischen dem Gasausstoßabschnitt (24) und dem ersten Teil (10c1) größer ist als ein Abstand zwischen dem Gasausstoßabschnitt (24) und dem zweiten Teil (10c2).

5. Geschmacksinhalator (100) nach Anspruch 4, wobei der Gasausstoßabschnitt (24) ein dünnwandiger Abschnitt (24) oder ein Öffnungsabschnitt ist, der an einem Ende der Stromquelle (21) bereitgestellt ist.

6. Geschmacksinhalator (100) nach einem der Ansprüche 1 bis 5, weiter umfassend eine Außenabdeckung (101), die die erste Oberfläche (10a) abdeckt.

7. Geschmacksinhalator (100) nach einem der Ansprüche 1 bis 6, wobei die Belüftungsöffnung (12) eine Vielzahl von Öffnungen einschließt, die aneinander angrenzen.

8. Geschmacksinhalator (100) nach einem der Ansprüche 1 bis 7, weiter umfassend einen Deckelabschnitt, der die Belüftungsöffnung (12) abdeckt, wobei
sich der Deckelabschnitt zum Zeitpunkt des Ausstoßes des Gases aus der Belüftungsöffnung (12) löst, um die Belüftungsöffnung (12) zu öffnen.

## Revendications

1. Inhalateur (100) d'arôme comprenant :
un boîtier (10) sur lequel est prévu un trou (12) de ventilation ; et
une source (21) d'alimentation logée dans le boîtier (10), dans laquelle
une partie (24, 26) de régulation qui régule une direction d'éjection du gaz généré à l'intérieur de la source (21) d'alimentation est formée au niveau d'au moins l'un du boîtier (10) et de la source (21) d'alimentation, et
le trou (12) de ventilation n'est pas prévu au niveau d'une partie du boîtier (10) qui croise la direction d'éjection du gaz, dans lequel
le boîtier (10) inclut une première surface (10a) dans laquelle est prévu le trou (12) de ventilation, et une seconde surface (10c) qui est reliée à la première surface (10a), et
la partie (24, 26) de régulation régule la direction d'éjection du gaz de sorte que le gaz est éjecté depuis la source (21) d'alimentation vers la seconde surface (10c).

2. Inhalateur (100) d'arôme selon la revendication 1, dans lequel le trou (12) de ventilation est prévu dans la première surface (10a), à proximité d'un point d'intersection entre la direction d'éjection du gaz et la seconde surface (10c).

3. Inhalateur (100) d'arôme selon la revendication 1 ou la revendication 2, dans lequel
la seconde surface (10c) inclut une première partie (10c1) dans laquelle est prévue une ouverture (10f) permettant l'insertion d'un consommable (110), et une seconde partie (10c2) faisant face à la première partie (10c1), et
la direction d'éjection du gaz est une direction s'étendant vers la seconde partie (10c2) de la seconde surface (10c).

4. Inhalateur (100) d'arôme selon la revendication 3, dans lequel
la partie (24, 26) de régulation inclut une partie (24) d'éjection de gaz prévue au niveau de la source (21) d'alimentation, et
une distance entre la partie (24) d'éjection de gaz et la première partie (10c1) est supérieure à une distance entre la partie (24) d'éjection de gaz et la seconde partie (10c2).

5. Inhalateur (100) d'arôme selon la revendication 4, dans lequel la partie (24) d'éjection de gaz est une partie (24) à paroi mince ou une partie d'ouverture prévue à une extrémité de la source (21) d'alimentation.

6. Inhalateur (100) d'arôme selon l'une quelconque des revendications 1 à 5, comprenant en outre un capot (101) externe qui recouvre la première surface (10a).

7. Inhalateur (100) d'arôme selon l'une quelconque des revendications 1 à 6, dans lequel le trou (12) de ventilation inclut une pluralité de trous adjacents les uns aux autres.

8. Inhalateur (100) d'arôme selon l'une quelconque des revendications 1 à 7, comprenant en outre une partie de couvercle qui recouvre le trou (12) de ventilation, dans lequel
la partie de couvercle se détache pour ouvrir le trou (12) de ventilation au moment de la décharge du gaz à partir du trou (12) de ventilation.
